# FASCICULE DE BREVET EUROPEEN

(11) **EP 1 059 715 B1**
(45) Date de publication et mention de la délivrance du brevet: **09.07.2003**
(21) Numéro de dépôt: 00401302.5
(22) Date de dépôt: 12.05.2000
(51) Int. Cl.: H02B 13/025

(54) **Cellule moyenne tension cloisonnée et isolée à l'air avec des volets d'évacuation des gaz en surpression**
Luftisolierte und aufgeteilte Mittelspannungs-Schaltanlage mit Druckentlastungsklappen
Partitioned Air insulated Medium voltage switchgear with overpressure flaps

(30) Priorité: 28.05.1999 FR 9906786
(43) Date de publication de la demande: 13.12.2000
(73) Titulaire: Alstom, 75116 Paris (FR)
(72) Inventeur: Casciaro, Edoardo, 5702 Niederlenz (CH); Lehner, Hermann, 5722 Gränichen (CH)
(74) Mandataire: Gosse, Michel

(56) Documents cités:
- EP-A- 0 030 489
- DE-A- 19 646 547
- FR-A- 2 579 032
- US-A- 5 689 097
- US-A- 5 710 402
- PATENT ABSTRACTS OF JAPAN vol. 1998, no. 02, 30 janvier 1998 (1998-01-30) & JP 09 271119 A (MITSUBISHI ELECTRIC CORP), 14 octobre 1997 (1997-10-14)

## Description

L'invention porte sur une cellule moyenne tension telle que définie en préambule de la revendication 1.

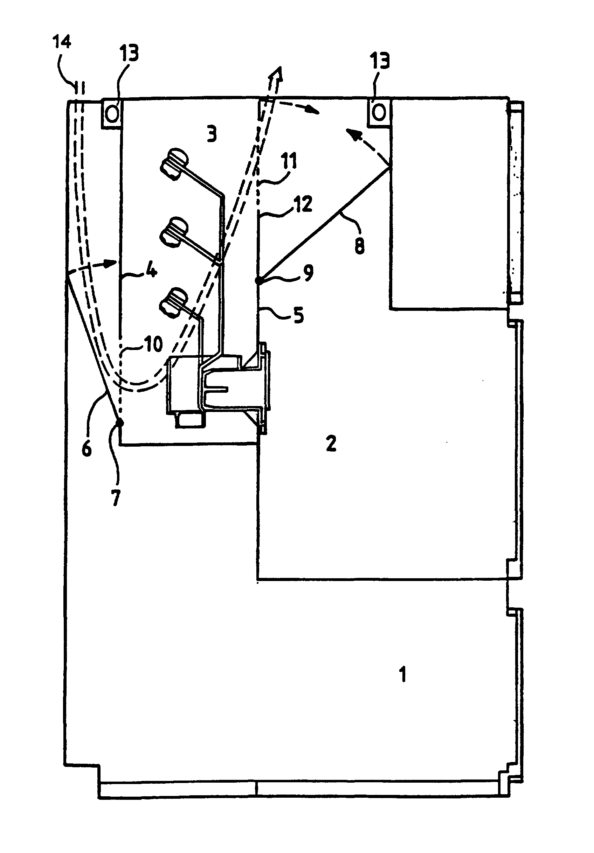

Une telle cellule est connue du document de brevet US5689097, et en particulier du mode de réalisation illustré sur la figure 2 de ce document. Outre le volet qui en exploitation normale ferme l'ouverture pratiquée dans la seconde paroi verticale du compartiment de jeu de barres, la cellule comprend aussi des volets d'évacuation des gaz en surpression sont installés sur le plafond de la cellule. Ces volets servent à limiter la pression interne lors de la présence d'un court-circuit et d'un arc électrique à l'intérieur d'un compartiment. Dans les cellules cloisonnées avec plusieurs compartiments, il est en effet très important qu'en présence d'un arc électrique dans un de ces compartiments, les gaz en surpression engendrés par l'arc électrique ne puissent pas pénétrer dans les autres compartiments. Mais cette disposition des volets nécessite une hauteur adéquate du local au-dessus de la cellule.

Les réalisations décrites dans le document de brevet ci-dessus présentent des architectures où les volets d'évacuation des gaz en surpression sont disposés horizontalement dans la cellule, ce qui présente l'inconvénient d'opposer une résistance verticale à l'ouverture qui peut être importante et peut limiter la vitesse d'ouverture des volets. Par ailleurs, l'aération du compartiment de jeu de barres peut être limitée du fait qu'il n'est pas prévu dans ces architectures une circulation permanente d'air par convection naturelle dans ce compartiment.

Un but de l'invention est de proposer une autre architecture de cellule plus compacte en hauteur.

Un autre but de l'invention est de permettre une ouverture rapide des volets d'évacuation des gaz en cas de surpression.

Enfin, un autre but de l'invention est de permettre une aération efficace du compartiment de jeu de barres.

A cet effet, l'invention a pour objet une cellule moyenne tension cloisonnée et isolée à l'air, avec un compartiment de jeu de barres, un compartiment de raccordement de câbles comportant un premier canal de dégagement fermé par un premier volet et un compartiment de disjoncteur comportant un second canal de dégagement fermé par un deuxième volet, lesdits canaux de dégagement longeant respectivement une première paroi verticale et une seconde paroi verticale du compartiment de jeu de barres pour déboucher sur le dessus de la cellule, chaque volet fonctionnant comme un clapet pour s'ouvrir en cas de surpression à l'intérieur d'un compartiment de façon à évacuer les gaz en surpression vers l'extérieur de la cellule, caractérisée en ce que lesdites première et seconde parois verticales comportent chacune une ouverture pour obtenir une circulation d'air à travers le compartiment de jeu de barres, et en ce que lesdits premier et deuxième volets sont respectivement disposés dans lesdits premier et second canaux de dégagement, montés chacun sur un axe de pivotement sensiblement horizontal sur lesdites parois et agencés pour s'ouvrir vers le haut et se rabattre en fin d'ouverture respectivement sur lesdites première et seconde ouvertures afin d'empêcher le passage des gaz vers le compartiment de jeu de barres.

Cette disposition des volets et des ouvertures contribue à renforcer l'intégrité du compartiment de jeu de barres sans nuire à l'efficacité de son aération en exploitation normale.

Selon un mode de réalisation particulier de la cellule selon l'invention, les ouvertures des première et seconde parois verticales consistent en des fentes d'aération.

L'une ou l'autre desdites ouvertures peut être réalisée par des fentes dans un volet pivotant supplémentaire monté dans l'une des parois au dessus du volet déjà présent et ayant un axe commun de pivotement avec celui-ci, et agencé pour se rabattre vers lui en cas de surpression dans le compartiment de jeu de barres. La disposition verticale de ce troisième volet contribue à ce qu'il s'ouvre très vite sous l'effet de la pression dans le compartiment de jeu de barres,

Selon encore une autre particularité de la cellule selon l'invention, le premier et le second volet sont montés de telle façon à occuper une position inclinée vers le haut par rapport à l'horizontale quand ils ferment respectivement le compartiment de raccordement de câbles et le compartiment de disjoncteur. Avec cette disposition, ces volets peuvent également s'ouvrir très vite sous l'effet de la pression car la composante verticale de l'effort résistant est réduite. En plus, un renforcement de la cellule pour empêcher le personnel de marcher sur les volets n'est pas nécessaire car l'idée de marcher sur une surface inclinée ne vient pas à l'esprit.

Avec l'agencement de la cellule selon l'invention, il est possible de fixer des crochets de levage à l'intérieur de la cellule dans les canaux de dégagement au-dessus des volets d'évacuation des gaz en surpression sans que ces crochets dépassent du dessus de la cellule. En plus, il devient possible de monter des canaux d'évacuation des gaz en surpression directement sur le dessus de la cellule ou bien encore un amortisseur.

Un exemple de réalisation d'une cellule isolée à l'air selon l'invention est décrit ci-après et illustré sur la figure unique qui montre cette cellule très schématiquement en coupe selon sa hauteur.

La figure montre une cellule cloisonnée et isolée à l'air avec un compartiment de raccordement de câbles 1 disposé sous un compartiment de disjoncteur 2 et un compartiment de jeu de barres 3. En plus, la figure montre un compartiment basse tension qui n'est pas référencé mais qui est disposé sur la face avant (à droite sur la figure) de la cellule devant le compartiment de jeu de barres 3.

Comme on peut le voir sur la figure, le compartiment 1 comporte un canal de dégagement qui longe la paroi verticale arrière 4 du compartiment 3 et la paroi arrière verticale de la cellule pour déboucher sur le dessus de la cellule et le compartiment 2 comporte également un canal de dégagement qui longe la paroi verticale avant 5 du compartiment 3 et la paroi verticale arrière du compartiment basse tension pour déboucher sur le dessus de la cellule.

Le compartiment de raccordement de câbles 1 est fermé par un premier volet 6, ayant un axe de pivotement 7 horizontal qui est monté sur la paroi arrière 4 du compartiment de jeu de barres 3, de façon à s'ouvrir à l'intérieur du canal de dégagement du compartiment 1 en se rabattant vers le haut contre la paroi 4 sans dépasser la ligne supérieure de la cellule.

Le compartiment de disjoncteur 2 est fermé par un second volet 8, ayant axe de pivotement 9 horizontal qui est monté sur la paroi avant 5 du compartiment de jeu de barres 3, de façon à s'ouvrir à l'intérieur du canal de dégagement du compartiment 2 en se rabattant vers le haut contre la paroi 5 sans dépasser la ligne supérieure de la cellule.

Quand les volets 6 et 8 ferment respectivement les compartiments 1 et 2, ils sont inclinés vers le haut par rapport à l'horizontale.

Pour obtenir une bonne circulation d'air dans le compartiment de jeu de barres 3 et que la chaleur due au courant d'exploitation soit bien dégagée, des fentes d'aération 10 sont prévues dans la paroi arrière 4 du compartiment 3 et des fentes d'aération 11 sont prévues dans la paroi avant 5 du compartiment 3. Ces fentes 10 et 11 rendent possible une circulation d'air à travers le compartiment 3 le long des lignes hachurées 14. L'axe 7 du volet 6 est placé juste en dessous des fentes 10 de sorte qu'en cas de surpression des gaz dans le compartiment de raccordement de câbles 1, le volet 6 se rabat contre la paroi 4 comme indiqué par la flèche en obturant les fentes 10. Ainsi, les gaz chauds évacués du compartiment 1 ne peuvent pas pénétrer dans le compartiment de jeu de barres 3. De la même façon, l'axe 9 du volet 8 est placé juste en dessous des fentes 11 de sorte qu'en cas de surpression des gaz dans le compartiment de disjoncteur 2, le volet 8 se rabat contre la paroi 5 comme indiqué par la flèche en obturant les fentes 11 ce qui empêche les gaz chauds évacués du compartiment 2 de pénétrer dans le compartiment 3.

Les fentes 11 dans la paroi avant 5 du compartiment de jeu de barres 3 sont ici prévues dans le volet 12 qui ferme ce compartiment. Comme visible sur la figure, le volet 12 est monté dans la paroi 5 et a un axe de pivotement 9 commun avec le volet 8. Le volet 12 est placé au-dessus du volet 8. En cas de surpression des gaz dans le compartiment de jeu de barres 3, le volet 12 se rabat vers le bas contre le volet 8 comme indiqué par la flèche. Il est entendu que le volet 12 pourrait tout aussi bien être monté dans la paroi 4. Il est également possible de prévoir des fentes d'aération dans le volet 8 pour ventiler le compartiment de disjoncteur 2. Ces fentes doivent avantageusement être disposées sur le volet 8 pour ne pas être en vi-à-vis des fentes 11 dans le volet 12 quand ce dernier est rabattu contre le volet 8.

Comme cela apparaît sur la figure, les volets 6,8 et 12 s'ouvrent à l'intérieur des canaux de dégagement des compartiments 1 et 2 et donc à l'intérieur de la cellule sans dépasser sa ligne supérieure. Il est possible en outre de monter des crochets 13 dans la partie supérieure des canaux de dégagement au-dessus des volets 6,8 et 12 sans que ceux-ci dépassent la ligne supérieure de la cellule.

## Revendications

1. Cellule moyenne tension cloisonnée et isolée à l'air, avec un compartiment de jeu de barres (3), un compartiment de raccordement de câbles (1) comportant un premier canal de dégagement fermé par un premier volet (6) et un compartiment de disjoncteur (2) comportant un second canal de dégagement fermé par un deuxième volet (8), lesdits canaux de dégagement longeant respectivement une première paroi verticale (4) et une seconde paroi verticale (5) du compartiment de jeu de barres pour déboucher sur le dessus de la cellule, chaque volet fonctionnant comme un clapet pour s'ouvrir en cas de surpression à l'intérieur d'un compartiment de façon à évacuer les gaz en surpression vers l'extérieur de la cellule, **caractérisée en ce que** lesdites première et seconde parois verticales (4,5) comportent chacune une ouverture (10,11) pour obtenir une circulation d'air à travers le compartiment de jeu de barres, et **en ce que** lesdits premier et deuxième volets (6,8) sont respectivement disposés dans lesdits premier et second canaux de dégagement, montés chacun sur un axe de pivotement (7,9) sensiblement horizontal sur lesdites parois (4,5) et agencés pour s'ouvrir vers le haut et se rabattre en fin d'ouverture respectivement sur lesdites première et seconde ouvertures (10,11) afin d'empêcher le passage des gaz vers le compartiment de jeu de barres (3).

2. Cellule selon la revendication 1 selon laquelle les ouvertures (10,11) des parois verticales (4,5) consistent en des fentes d'aération.

3. Cellule selon l'une des revendications 1 à 2 dans laquelle l'une ou l'autre desdites ouvertures (10,11) dans les parois verticales (4,5) est réalisée par des fentes dans un volet pivotant supplémentaire (12) monté dans l'une des parois (4,5) au-dessus du volet déjà présent et ayant un axe commun de pivotement avec celui-ci, et agencé pour se rabattre vers lui en cas de surpression dans le compartiment de jeu de barres (3).

4. Cellule selon l'une des revendications 1 à 3 dans laquelle le premier volet (6) et le second volet (8) sont montés de façon à occuper une position inclinée vers le haut par rapport à l'axe de pivotement quand ils ferment respectivement le compartiment de raccordement de câbles et le compartiment de disjoncteur.

5. Cellule selon l'une des revendications 1 à 4 dans laquelle le second volet (8) fermant le compartiment de disjoncteur est muni de fentes d'aération.

6. Cellule selon la revendication 5 dans laquelle les fentes d'aération du second volet (8) sont disposées de façon à ne pas avoir de vis à vis avec les fentes du volet supplémentaire (12) lorsqu'ils sont rabattus l'un contre l'autre.

7. Cellule selon l'une des revendications 1 à 6 dans laquelle des crochets de levage (13) sont fixés l'intérieur de la cellule sous son plafond dans les canaux de dégagement.

## Patentansprüche

1. Zelle für Mittelspannung, die durch eine Wand unterteilt und gegenüber Luft isoliert ist, mit einer Sammelschienenkammer (3), einer Kabelverbindungskammer (1), die einen ersten Entlastungskanal aufweist, der von einer ersten Klappe (6) verschlossen ist, und einer Überlastschalter-Kammer (2), die einen zweiten Entlastungskanal aufweist, der von einer zweiten Klappe (8) verschlossen ist, wobei die Entlastungskanäle längs einer ersten vertikalen Wand (4) bzw. einer zweiten vertikalen Wand (5) der Sammelschienenkammer verlaufen und in die Oberseite der Zelle münden, wobei jede Klappe als eine Ventilklappe dient, die sich im Fall eines Überdrucks in einer Kammer öffnet, um die Überdruckgase in die äußere Umgebung der Zelle zu entlassen, **dadurch gekennzeichnet, dass** die ersten und zweiten vertikalen Wände (4, 5) jeweils eine Öffnung (10, 11) aufweisen, um eine Luftzirkulation durch die Sammelschienenkammer zu erhalten, und dass die ersten und zweiten Klappen (6, 8) in den ersten bzw. zweiten Entlastungskanälen angeordnet sind, jeweils an einer Schwenkachse (7, 9), die im Wesentlichen horizontal ist, an den Wänden (4, 5) angebracht sind und so beschaffen sind, dass sie sich nach oben öffnen und sich am Ende des Öffnens auf die ersten bzw. zweiten Öffnungen (10, 11) legen, um den Durchgang der Gase in die Sammelschienenkammer (3) zu verhindern.

2. Zelle nach Anspruch 1, bei der die Öffnungen (10, 11) der vertikalen Wände (4, 5) aus Belüftungsschlitzen bestehen.

3. Zelle nach einem der Ansprüche 1 bis 2, bei der die eine oder die andere der Öffnungen (10, 11) in den vertikalen Wänden (4, 5) durch Schlitze in einer zusätzlichen Schwenkklappe (12) verwirklicht sind, die in einer der Wände (4, 5) über der bereits vorhandenen Klappe angebracht ist, mit dieser eine gemeinsame Schwenkachse besitzt und so beschaffen ist, dass sie sich auf diese legt, wenn in der Sammelschienenkammer (3) ein Überdruck vorhanden ist.

4. Zelle nach einem der Ansprüche 1 bis 3, in der die erste Klappe (6) und die zweite Klappe (8) in der Weise angebracht sind, dass sie eine in Bezug auf die Schwenkachse nach oben geneigte Stellung einnehmen, wenn sie die Kabelverbindungskammer bzw. die Überlastschalter-Kammer verschließen.

5. Zelle nach einem der Ansprüche 1 bis 4, in der die zweite Klappe (8), die die Überlastschalter-Kammer verschließt, mit Belüftungsschlitzen versehen ist.

6. Zelle nach Anspruch 5, in der die Belüftungsschlitze der zweiten Klappe (8) so angeordnet sind, dass sie sich die nicht gegenüber den Schlitzen der zusätzlichen Klappe (12) befinden, wenn sie aufeinandergelegt sind.

7. Zelle nach einem der Ansprüche 1 bis 6, in der unter der Decke in den Entlastungskanälen Lasthaken (13) befestigt sind.

## Claims

1. A compartmented and air-insulated medium-voltage bay with a busbar compartment (3), a cable connection compartment (1) including a first evacuation passage closed by a first flap (6), and a circuit-breaker compartment (2) including a second evacuation passage closed by a second flap (8), said evacuation passages respectively running along a first vertical wall (4) and a second vertical wall (5) of the busbar compartment and opening onto the top of the bay, and each flap operating as a valve which opens in the event of overpressure inside a compartment to evacuate the overpressurized gases to the exterior of the bay, which bay is **characterized in that** said first and second vertical walls (4, 5) each include an opening (10, 11) to obtain circulation of air through the busbar compartment and **in that** said first and second flaps (6, 8) are respectively disposed in said first and second evacuation passages and each mounted on a substantially horizontal pivot (7, 9) on said walls (4, 5) and adapted to open upwardly and to be closed at the end of opening respectively over said first and second openings (10, 11) to prevent the passage of the gases towards the busbar compartment (3).

2. A bay according to claim 1, wherein the openings (10, 11) in the vertical walls (4, 5) consist of ventilation slots.

3. A bay according to either claim 1 or claim 2 wherein one or the other of said openings (10, 11) in the vertical walls (4, 5) is provided by slots in an additional pivoting flap (12) mounted on one of the walls (4, 5) above the flap already present thereon, sharing a pivot therewith, and adapted to be closed towards it in the event of overpressure in the busbar compartment (3).

4. A bay according to any of claims 1 to 3 wherein the first flap (6) and the second flap (8) are mounted so as to occupy a position inclined upwardly relative to the pivot when they respectively close the cable connection compartment and the circuit-breaker compartment.

5. A bay according to any of claims 1 to 4 wherein the second flap (8) for closing the circuit-breaker compartment is provided with ventilation slots.

6. A bay according to claim 5 wherein the ventilation slots of the second flap (8) are disposed so that they do not line up with the slots in the additional flap (12) when they are closed one against the other.

7. A bay according to any of claims 1 to 6 wherein lifting hooks (13) are fixed to the interior of the bay in the evacuation passages under its roof.
